# EUROPEAN PATENT APPLICATION

(11) **EP 3 561 354 A1**
(43) Date of publication of application: **30.10.2019**
(21) Application number: 19171047.4
(22) Date of filing: 25.04.2019
(51) Int. Cl.: F16L 3/22, H02G 3/04

(54) **MOUNTING ELEMENT**

(30) Priority: 26.04.2018 DK PA201870249
(71) Applicant: Siltec A/S, 8600 Silkeborg (DK)
(72) Inventor: Gasbjerg, Frank Hviid, 8660 Skanderborg (DK)
(74) Representative: Nielsen, Leif

(57) **Abstract**

A mounting element (1) is described for carrying cables and/or hoses (43) , of a type that is made of wire material. The mounting element (1) comprises at least two parallel wires (3) bent into a U-shape and transverse wires (5) fastened therebetween, so that an upper surface (14) , a first side wall (13) and a second side wall (15) are formed. The mounting element (1) comprises a bar (7) , which is mounted in the first and the second side walls (13, 15) , and a spiral element (9) , which is fitted concentrically around the bar (7) .

## Description

### Field of the invention

The present invention relates to mounting elements for carrying cables or hoses of a type that is made of wire material, said mounting element comprising at least two parallel wires bent into a U-shape and transverse wires fastened thereto, so that an upper surface, a first side wall and a second side wall are formed for the mounting element,
- a bar, which is mounted in the first and the second side wall, and which together with the upper surface and a first part of the side walls forms a closed region.

### Background of the invention

Mounting elements of the type mentioned in the introduction are known. With this type of mounting element it is not possible to place cables and hoses in such a way that they can be cleaned easily and have well-defined spacing.

WO 96/08063 A1 describes mounting elements for carrying cables or hoses, of the type that is made of wire material. The mounting element comprises at least two parallel wires bent into a U-shape and transverse wires fastened thereto, so that an upper surface, a first side wall and a second side wall are formed for the mounting element. The mounting element comprises a bar, which is mounted in the first and the second side wall. Together with the upper surface and a first part of the side walls, the bar forms a closed region for receiving the cables or hoses.

### Aim of the invention

The aim of the present invention is to provide a mounting element, where the individual cables and/or hoses are placed with spacing, wherein cleaning between the cable and/or the hose is possible.

### Description of the invention

This is achieved according to the present invention with a mounting element of the type mentioned in the introduction, which has the distinctive feature that the mounting element further comprises:
- a spiral element, which is applied concentrically around the bar.

The mounting element may be used in any configuration in combination with cables and/or hoses. The configuration will thus be adjusted to the actual form of the cables and/or hoses or combination of cables and hoses used.

The distance between the turns of the spiral element may be adjusted to the cables. The distance may be larger to maintain a distance between the cables and/or hoses. This prevents the cables and/or hoses being squeezed.

The distance between the turns of the spiral element may also be less than the diameter of the cables and/or hoses. The elasticity of the spiral element clamps the cables and/or hoses. The cables and/or hoses are thus held in place. The distance between the cables and/or hoses is well-defined, as it is determined by the dimensions of the spiral element.

The distance between the upper surface and the nearest part of the spiral element may be less than the cable diameter. The cables are thus held in place in a particularly stable manner. The cables and/or hoses will not become loose from the mounting element during high-pressure cleaning.

The spiral element may advantageously be a spiral spring.

The spiral element maintains a distance between the cables and/or hoses. Well-defined cable routing is obtained.

The transverse wires may be fastened by welding.

According to a further embodiment, a distinctive feature of the mounting element according to the invention is that the external walls are perpendicular to the upper surface.

According to a further embodiment, a distinctive feature of the mounting element according to the invention is that the bar is mounted parallel to the upper surface.

According to a further embodiment, a distinctive feature of the mounting element according to the invention is that the diameter of the spiral element varies over the length of the spiral element, so that it clamps round the bar on at least part of its length.

The spiral element may clamp round the bar at one end of the bar. Alternatively the spiral element may clamp round the bar in the region by a side wall. Alternatively the spiral element may clamp round the bar in the regions by both side walls. Alternatively the spiral element may clamp round the bar in a central part between the two side walls.

According to a further embodiment, a distinctive feature of the mounting element according to the invention is that the ratio of the diameter of the bar to the largest diameter of the spiral element is between 1:5 and 1:8.

According to a further embodiment, a distinctive feature of the mounting element according to the invention is that the ratio of the diameter of the bar to the largest diameter of the spiral element is between 1:3 and 1:10.

According to a further embodiment, a distinctive feature of the mounting element according to the invention is that the bar is mounted detachably on the side walls with fastening means.

According to a further embodiment, a distinctive feature of the mounting element according to the invention is that the bar is mounted parallel to the upper surface. According to a further embodiment, a distinctive feature of the mounting element according to the invention is that the side walls are perpendicular to the upper surface.

According to a further embodiment, a distinctive feature of the mounting element according to the invention is that mounting means for mounting the mounting element are provided in the upper surface.

The mounting means are designed for mounting on machine parts, ceilings or walls.

According to a further embodiment, a distinctive feature of the mounting element according to the invention is that the mounting means are made as at least one through-hole.

The at least one through-hole is designed for receiving screws or bolts and the like.

According to a further embodiment, a distinctive feature of the mounting element according to the invention is that the wires in the region near the at least one through-hole are flat.

According to a further embodiment, a distinctive feature of the mounting element according to the invention is that the mounting means are made as bent curves in the wires.

The bent curves can receive screws, bolts and the like.

According to a further embodiment, a distinctive feature of the mounting element according to the invention is that the bar is mounted on the side walls by means of fastening means, and that the fastening means comprise at least one recess in the bar and at least two fastening wires in a side wall of the cable tray, said fastening wires being provided at a distance corresponding to the diameter of the recess in the bar, said fastening wires being elastically flexible, so that the bar can be introduced between the fastening wires, wherein the latter are received in the recess in the bar. When the fastening wires are received in the recess in the bar, application of force will be required to release the bar from the two fastening wires again. Thus, the bar is fastened detachably. No tools are required for assembly. Quick and easy installation is obtained. Effective, cost-saving installation is obtained thereby.

According to a further embodiment, a distinctive feature of the mounting element according to the invention is that the fastening means comprise an asymmetric hole in the first side wall, a projection on the bar in the region at the first end of the bar, said projection being shaped so that the bar and the projection correspond to the asymmetric hole, and a partial expansion of the diameter of the bar at the second end of the bar.

The partial expansion of the diameter may be provided by flattening the bar.

The projection on the bar is led through the asymmetric hole, so that the projection is outside the asymmetric hole. Thus, the bar is rotated, and the projection comes up against the material around the hole and is fastened thereby.

A force is applied to press the projection against the outside of the first side wall. This force is applied either through elasticity in the side walls or by means of a spring fitted on the bar.

According to a further embodiment, a distinctive feature of the mounting element according to the invention is that it comprises a hollow in the region near the asymmetric hole on the outside to receive the projection.

The hollow ensures that the projection is secured on the outside of the side wall. The projection and the hollow therefore act as a locking mechanism.

According to a further embodiment, a distinctive feature of the mounting element according to the invention is that the individual partial elements of the mounting element are welded to one another.

The partial elements may be wires bent into a U-shape, transverse wires, bars and spiral elements.

A further aspect of the invention is a combination of mounting elements and cables and/or hoses, where a distance between the upper surface and the nearest part of the spiral element is less than the diameter of the cables and/or hoses.

The dimensioning of the spiral element holds the cables in place during cleaning. The cables and/or hoses cannot become detached from the mounting element and the spiral element, even during cleaning with a high-pressure cleaner.

### Description of the drawing

The invention is explained in more detail hereunder, referring to the appended drawing, where
- Fig. 1: shows a sketch of a mounting element according to the invention with the bar and spiral element mounted in the mounting element,
- Figs. 2a-c: show a sketch of the same mounting element shown in Fig. 1 with the bar and spiral element not mounted,
- Fig. 3: shows a sketch of a further embodiment of a mounting element with the bar and spiral element mounted,
- Figs. 4a-d: show a sketch of the same mounting element seen in Fig. 3 with the bar and spiral element not mounted, and
- Fig. 5: shows a sketch of a combination of mounting elements and cables and/or hoses.

In describing the figures, identical or equivalent elements will be denoted by the same reference symbol in the various figures. Accordingly, explanations will not be given for all details in connection with each individual figure/embodiment.

### Reference symbols

- 1: Mounting element
- 3: Wires bent into a U-shape
- 5: Transverse wires
- 7: Bar
- 9: Spiral element
- 11: Spiral spring
- 13: First side wall
- 14: Upper surface
- 15: Second side wall
- 17: First region near the first side wall
- 19: Second region near the second side wall
- 21: Turn
- 23: Distance between the nearest part of the spiral element and the upper surface
- 25: Recess
- 27: Fastening wire
- 29: Mounting means
- 31: Through-hole
- 33: Asymmetric hole
- 35: Projection, on bar
- 37: First end, bar
- 39: Second end, bar
- 41: Expansion of diameter, bar
- 43: Cables and/or hoses

### Detailed description of the invention

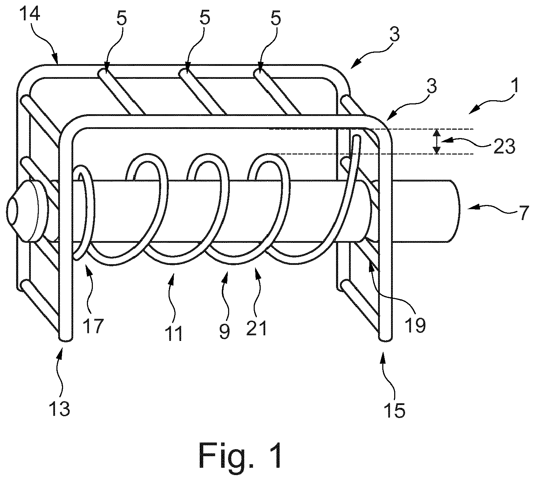

Fig. 1 shows a sketch of a mounting element 1 according to the invention. The mounting element 1 comprises two U-shaped lateral wires 3 and transverse wires 5 fitted between them. The mounting element further comprises a bar 7 and a spiral element 9. The spiral element may advantageously be a spiral spring 11. The diameter of the spiral element varies over the length of the spiral element. In the region 17 near the first side wall the spiral element 9 clamps around the bar 7. The dimensions of the spiral element are adjusted to the dimensions of the cables and/or hoses (not shown). Thus, the distance between the individual turns 21 of the spiral element 9 may be greater than the diameter of the cables and/or hoses. This ensures there is a distance between the cables and/or hoses. Alternatively the distance between the individual turns 21 may also be less than the diameter of the cables and/or hoses. The elasticity of the spiral element 9 will thus clamp the cables and/or hoses and hold these in place.

The distance 23 between the nearest part of the spiral element 9 and the upper surface 14 may be less than the expected diameter of the cables and/or hoses. This ensures secure routing of cables and/or hoses. The cables and/or hoses will not move in the mounting element even during cleaning with a high-pressure cleaner.

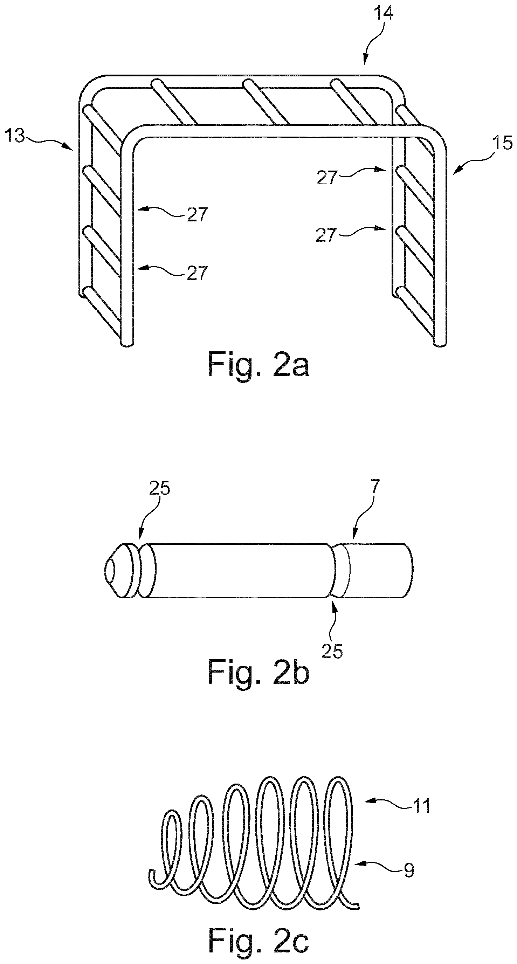

Figs. 2a-c show a sketch of the same mounting element as shown in Fig. 1 with bar 7 and spiral element 9 in the non-mounted state. The spiral element 9 is made as a spiral spring 11. Fig. 2a shows the lateral wires bent into a U-shape 3 with transverse wires 5 fitted between them. Fig. 2b shows the bar 7. The bar comprises two recesses 25. These recesses 25 can engage with the fastening wires 27 as seen in Fig. 2a. Fig. 2c shows the spiral element 9, which consists of a spiral spring 11.

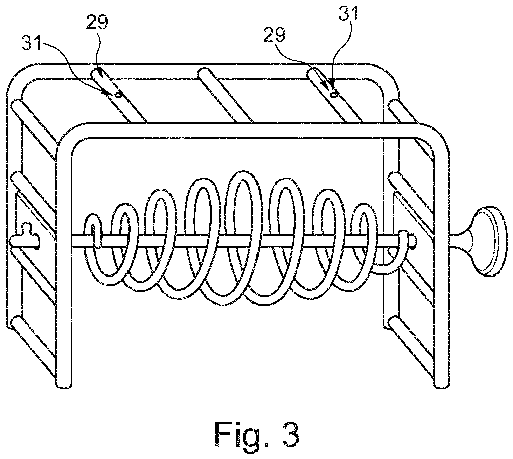

Fig. 3 shows a further embodiment of the mounting element. The spiral element 9 clamps round the bar in both a first region 17 near the first side wall 13 and in a second region 19 near the second side wall 15.

The mounting element comprises mounting means 29. The mounting means are made as through-holes 31.

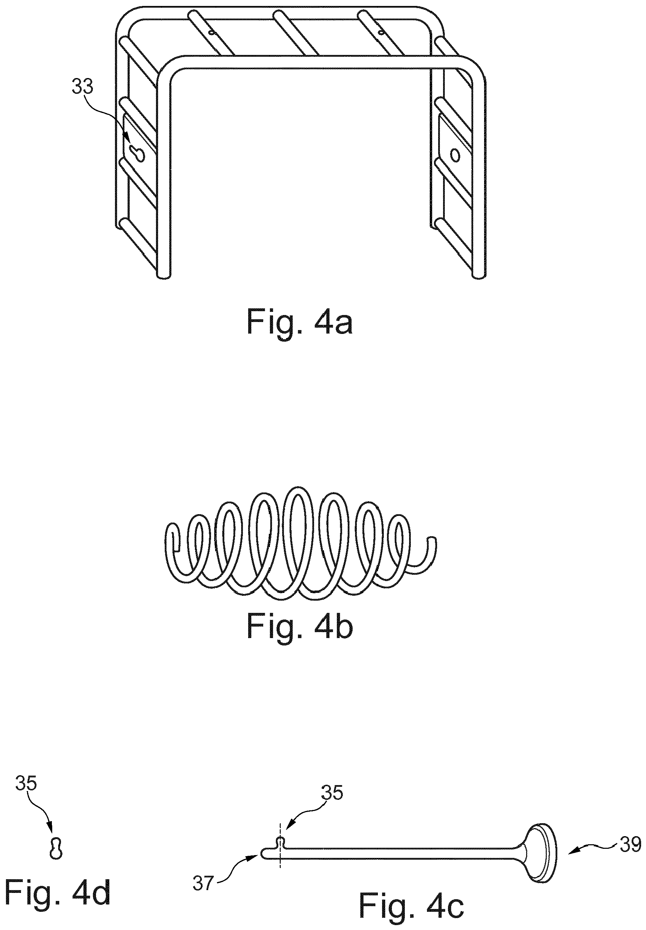

Figs. 4a-d show a sketch of the same mounting element as seen in Fig. 3 with bar 7 and spiral element 9 in the non-mounted state. Fig. 4a shows an asymmetric hole 33 in the first side wall 13. Fig. 4b shows the spiral element. Fig. 4c shows the bar 7 with a projection 35 in the region at the first end of the bar 37. The bar comprises a partial expansion 41 of the diameter of the bar 7 at the second end 39 of the bar 7. Fig. 4d shows a cross-section down through the bar in the region marked with a dashed line in Fig. 4c.

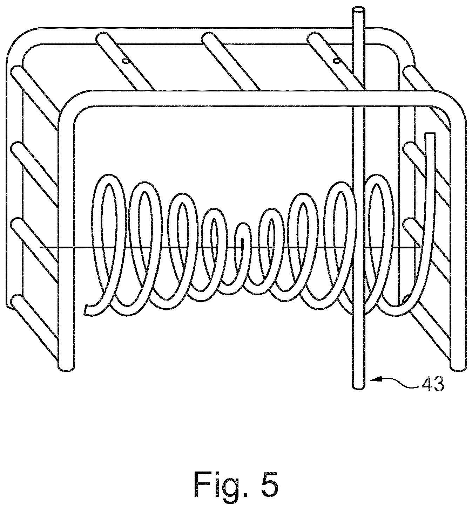

Fig. 5 shows a combination according to the invention of a mounting element and cables and/or hoses 43. The spiral element clamps round the bar in a central part between the first and second side wall.

## Claims

1. Mounting element (1) for carrying cables or hoses (43) and of the type that is made of wire material, said mounting element (1) comprising:
- at least two parallel wires bent into a U-shape (3) and transverse wires (5) fastened thereto, so that an upper surface (14), a first side wall (13) and a second side wall (15) are formed for the mounting element (1),
- a bar (7), which is mounted in the first (13) and the second side wall (15), and which together with the upper surface (14) and a first part of the side walls (13, 15) forms a closed region,
**characterized in that** the mounting element further comprises:
- a spiral element (9), which is applied concentrically around the bar (7).

2. Mounting element according to claim 2, **characterized in that** the diameter of the spiral element (9) varies over the length of the spiral element (9), so that on at least part of its length it clamps round the bar (7).

3. Mounting element according to any one of the preceding claims, **characterized in that** the ratio of the diameter of the bar (7) to the largest diameter of the spiral element (9) is between 1:5 and 1:8.

4. Mounting element according to any one of the preceding claims, **characterized in that** the bar (7) is mounted detachably on the side walls (13, 15) with fastening means.

5. Mounting element according to any one of the preceding claims, **characterized in that** the bar (7) is mounted parallel to the upper surface (14).

6. Mounting element according to any one of the preceding claims, **characterized in that** the side walls (13, 15) are perpendicular to the upper surface (14).

7. Mounting element according to any one of the preceding claims, **characterized in that** mounting means (29) for mounting the mounting element (1) are provided in the upper surface (14).

8. Mounting element according to any one of the preceding claims, **characterized in that** the bar (7) is mounted on the side walls (13, 15) by means of fastening means, and **in that** the fastening means comprise at least one recess (25) in the bar (7) and at least two fastening wires (27) in a side wall of the mounting element (1), said fastening wires (27) being fitted at a distance corresponding to the diameter of the recess (25) on the bar (7), said fastening wires (27) being elastically flexible, so that the bar (7) can be introduced between the fastening wires (27), these being received in recess (25) of the bar (7).

9. Mounting element according to any one of claims 1 to 7, **characterized in that** the individual partial elements of the mounting element (1) are welded to one another.

10. Combination of mounting element (1) according to any one of the preceding claims and cables and/or hoses (43), where a distance between the upper surface (14) and the nearest part of the spiral element (9) is less than the diameter of the cables and/or hoses (43).
